# EUROPEAN PATENT SPECIFICATION

(11) **EP 2 821 888 B1**
(45) Date of publication and mention of the grant of the patent: **12.06.2019**
(21) Application number: 13174561.4
(22) Date of filing: 01.07.2013
(51) Int. Cl.: G06F 3/01, G06F 3/03

(54) **Gesture detection using ambient light sensors**
Gestenerkennung mit Umgebungslichtsensoren
Détection de geste utilisant des capteurs de lumière ambiante

(43) Date of publication of application: 07.01.2015
(73) Proprietor: BlackBerry Limited, Waterloo, ON N2K 0A7 (CA)
(72) Inventor: ZAWADA, Krzystof, Illinois, 60429 (US); MANKOWSKI, Peter, Waterloo, Ontario N2L 3W8 (CA); SOSNOWSKI, Adam, Waterloo, Ontario N2L 3W8 (CA); IDZIK, Jacek, Waterloo, Ontario N2L 3W8 (CA); GERIS, Ryan Alexander, Waterloo, Ontario N2L 3W8 (CA)
(74) Representative: Fennell, Gareth Charles

(56) References cited:
- US-A1- 2009 139 778
- US-A1- 2010 177 060
- US-A1- 2011 096 009
- US-A1- 2012 280 904
- US-A1- 2012 293 404

## Description

### BACKGROUND

Computers, mobile phones, tablets, and other computing and communication devices include a variety of input interfaces. For example, computers include keyboard and mouse input interfaces. Using a mouse, a user may navigate to an area of the display and make a selection. For various reasons, a mouse or equivalent input interface is not practical for handheld devices such as tablets and mobile phones. One of those reasons is that a handheld device is generally not used on a flat, stable surface to accommodate mouse operation. Most tablets and many mobile devices include capacitive touch sensors built under the screen that are used as a primary navigation and data input method. These touch sensors require users to navigate the display with their finger, thereby potentially obstructing the screen as they try to make a selection and leaving finger prints and smudges on the screen over time.

US 2012/280904 A1 discloses a touch-less gesture sensing device including a multiple segmented photo sensor and a control circuit for processing sensed voltages output from the sensor. The control circuit processes the sensed voltage signals of the photo sensor segments to calculate a differential signal and to determine, based on the calculated differential signal, a vector of object motion relative to the segmented photo sensor. In one embodiment, the gesture sensing device and algorithm is adapted for use with an illumination source included in the gesture sensing device. In an alternative embodiment, instead of detecting reflected light originating from the illumination source included in the gesture sensing device, a touch-less gesture is detected based on ambient light shadowed by an object with which the gesture is performed.

US 2009/139778 A1 discloses a device which enables a user to interact with the device through gestures made in an area adjacent to the device. To this end, the device has a plurality of proximity sensors arranged on an area of its surface. User gestures in this area are detected by creating sensing images from data received from each of the sensors and then analysing sequences of these images to detect gestures. The detected gestures may be mapped to particular inputs to a software program running on the device, and therefore a user can control the operation of the program through gestures. In one example, the proximity sensors are configured to detect visible light which is reflected back by an object performing the gesture.

US 2011/096009 A1 discloses a display panel with a plurality of pixels arranged in a matrix of rows and columns, wherein each pixel includes a display element and a photo sensor. Based on the amount of ambient light with which each of the photo sensors is irradiated, and which is obtained by sequentially scanning the photo sensors using corresponding scanning lines and output signal lines, the position of a touch-less object above the display panel shadowing the ambient light is determined. A motion of the object is detected by continuously capturing positional data of the object and comparing an aimed positional data with the positional data obtained before or after the aimed positional data. For example, when the last positional data is the right and the positional data of this time is the left, the object can be detected to move from right to left. Based on the direction of the detected object motion a corresponding application function is performed. In one embodiment, the sensitivity of the photo sensors is variable in accordance with the amount of ambient light, so that the sensitivity can be set at an optimal value corresponding to the brightness of the environment where the display panel is used, and a shadow of the touch-less object can be easily recognised.

US 2010/177060 A1 discloses a touch screen display including a matrix of optical sensors. The optical sensors are used to detect changes in ambient light that result from a shadowing effect of an object in proximity to, or in contact with, the touch screen display. Based on the obtained image data, the position of the object can be determined and changes of the position can be tracked. Moreover, the optical sensors are used to identify particular objects that are in contact with the touch screen display and include fiducial markings on their underside. The fiducial markings produce patterned variations in the amount of light that is emitted by the pixels of the touch screen display and reflected from the object's underside back to the optical sensor of the touch screen display. By measuring the pattern of reflected light from the object's underside, the particular objects with unique patterns of fiducial markings can be identified. To improve the performance of the fiducial marking detection, the spectral sensitivity profile of the optical sensors can be dynamically narrowed, such that the effects of variations in ambient light intensity on the detection of the reflected light originating from the pixels of the touch screen display can be reduced.

### SUMMARY OF THE INVENTION

The invention is defined by the appended independent claims 1 and 9. The dependent claims define advantageous embodiments.

The embodiments and/or examples of the following detailed description which are not covered by the claims, are provided for illustrative purpose only and are only intended to assist the reader in understanding the present invention. However, such embodiments and/or examples which are not covered by the claims do not form part of the present invention that is solely defined by the claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 shows a device including an exemplary arrangement of ambient light sensors;
Figure 2 depicts another view of the device shown in Figure 1;
Figure 3 shows a device including an exemplary arrangement of ambient light sensors according to another embodiment;
Figure 4 shows a device including an exemplary arrangement of ambient light sensors according to yet another embodiment;
Figure 5 is a block diagram of a system to process gestures;
Figure 6 is a block diagram of a system to control the two or more ambient light sensors;
Figure 7 shows the process flow of a method of detecting a gesture; and
Figure 8 is a block diagram of an exemplary device that facilitates touch-less gesture detection as described herein.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims.

As noted above, touchscreens that are currently used as input devices for mobile devices may present issues of accuracy, due to a user's finger covering the selection during input, and maintenance, due to fingerprints and smudges being left during use. Gesture-based input has been considered as an alternative to touch input in some mobile devices. These systems include cameras and processors to record and interpret gesture inputs, for example. Other exemplary systems include one or more infrared light emitting diodes coupled to one or more infrared light sensors to record intensity at each of the infrared light sensors.

Embodiments of the system and method described herein include ambient light sensors that facilitate recognition of a gesture made by an object, such as a user's hand, that is in touch-less communication with a device, such as a smart phone or tablet, for example.

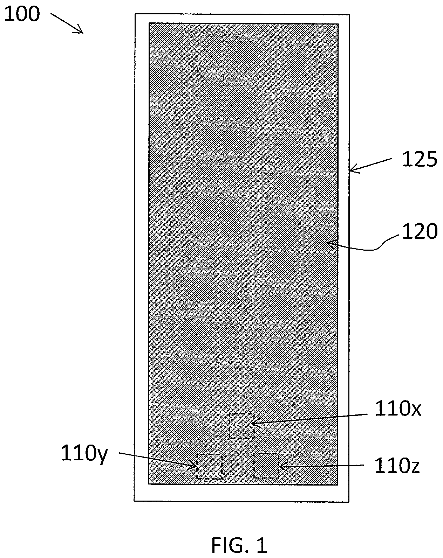

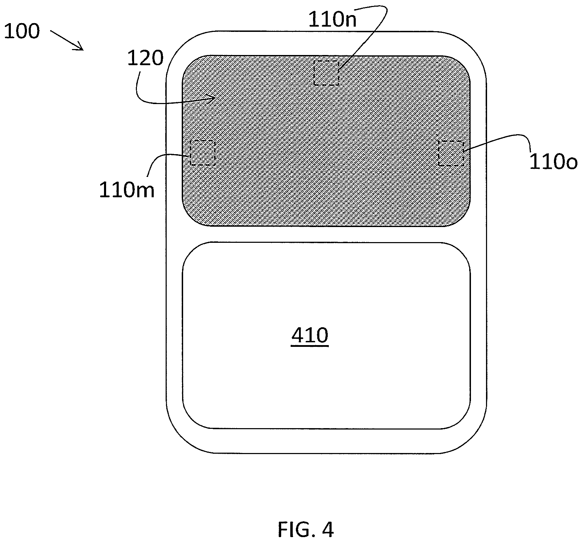

Figure 1 shows a device 100 including an exemplary arrangement of ambient light sensors 110. The device 100 may be any computation, communication, or data storage device such as a tablet, laptop computer, smart phone, music player, storage device, and the like. The view depicted by Figure 1 shows the screen 120 (e.g., glass or other transparent surface) of the device 100 on a surface of the body 125 that displays information to a user, which can be based on user selections or generated by the device 100. Information generated by the device can include the status of communication connections (mobile network, wifi connection(s), Bluetooth connections, etc.), telephone call, or electronic messages or any combination thereof. The screen 120 can act as the input/output (I/O) between the device 100 and the user. The exemplary device 100 shown in Figure 1 has a screen 120 that occupies most of one surface of the device 100. Other exemplary devices 100 may instead include a keyboard or other components such that the relative size of the screen 120 to the size of a surface of the device 100 is smaller than shown in Figure 1 (see e.g., Figure 4). Three ambient light sensors (ALSs) 110x, 110y, 110z are disposed beneath the screen 120 in Figure 1. Although the ALSs 110 are shown disposed beneath the screen 120 to protect from environmental and accidental damage, the ALSs 110 receive the same intensity of ambient light or at least sufficient ambient light to detect a change in ambient light whether they are disposed above or below the screen 120, because the screen 120 is a transparent device element that allows ambient light to pass through. The screen 120 includes a glass or polymer exterior layer that may filter or diffuse some light, e.g., certain ranges of light wavelengths. Sufficient light for detection as described herein passes through the exterior layer of the screen 120. The ambient light refers to the available light (brightness and direction of light) in the environment in which the device 100 is being used. As such, the ALSs 110 are passive devices. In an example, the ALSs 110 do not have and are not associated with emitters on the device 100 to provide the light that is detected by the ALSs 110. In a further example, the device 100 does not emit light for the purpose of gesture detection. Ambient light is, in an example, the light present in the environment in which the device is present.

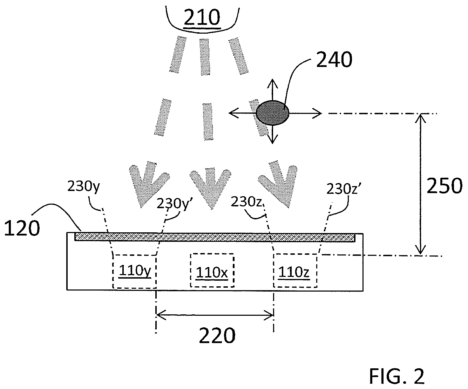

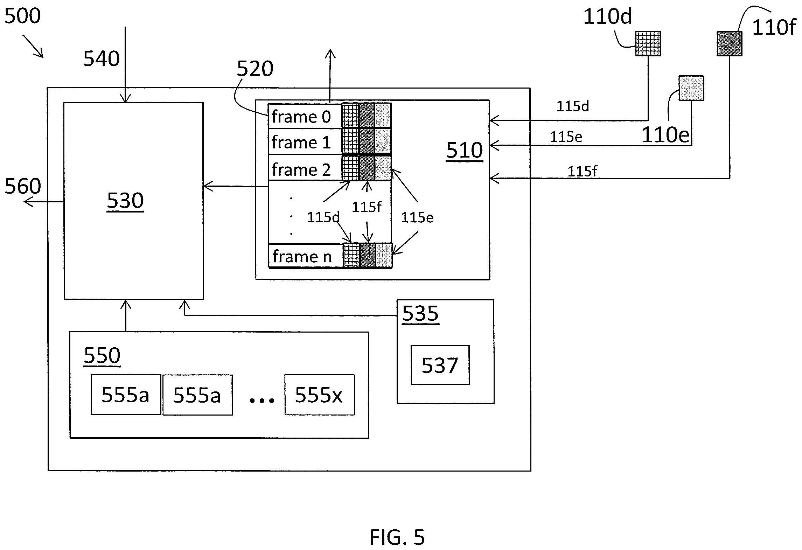

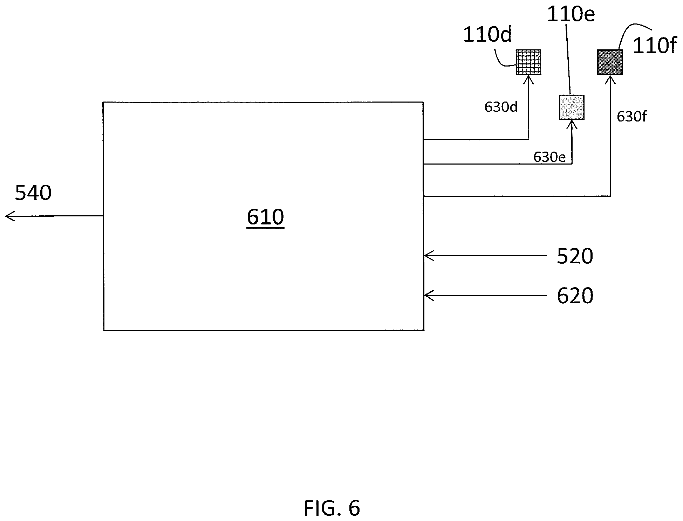

Figure 2 depicts another view of the device 100 shown in Figure 1. The view shown by Figure 2 includes a light source 210. This light source 210 may be the sun, a lamp, or some combination of light sources that provide the available light in a given environment in which the device 100 is being used. If the device 100 is outside during the day, the sun provides the ambient light, which is spread spectrum light. If the device is being used indoors with no exterior windows, the ambient light is generated by indoor lighting systems, e.g. lamps, fluorescent bulbs, incandescent bulbs, LEDs, etc. The ambient light can also be a combination of natural light (e.g., sunlight) and artificial light (e.g., fluorescent light, incandescent light). Each ALS 110 outputs a current level corresponding with the measured light intensity 115 (see e.g., Figure 5). An analog-to-digital converter may be used to derive a digital output from the ALSs 110. Each of the ALSs 110 may have adjustable sensitivity (adjustable gain setting). According to the present invention, each ALC 110 is a spread spectrum sensor with a selectable range of operation among two or more ranges (wavelength bands or ranges). The process entailed in this selection is discussed further below with reference to Figure 6. The full range of operation of each ALS 110 may be close to the wavelength range of visible light (400nm to 700 nm). A typical commercially available ALS may detect ambient light in the wavelength range of 350nm to 700 nm, for example. Because each ALS 110 measures the intensity of the available (ambient) light within its zone of reception (see e.g. 230y and 230y' defining a zone of reception for ALS 110y and 230z and 230z' defining a zone of reception for ALS 110z), the ALS 110 is a passive sensor that does not require a corresponding emitter or transmitter. The zone of reception is typically cone-shaped with the cone dimensions being determined by an angle of half sensitivity. Figure 2 is a cross-sectional view of an exemplary zone of reception. Each ALS 110 may measure light intensity 115 within its zone of reception in a photometric unit (lux) to provide a measure of lumens per square-meters or in a radiometric unit (irradiance) to provide a measure of watts per square-meters. In the embodiment shown by Figures 1 and 2, the three ALSs 110x, 110y, 110z are arranged in a triangular pattern. That is, at least one ALS 110 is offset or not linearly aligned with at least two other ALSs 110.

Through the inclusion of two or more ALSs 110 (e.g., three ALSs 110x, 110y, 110z), the device 100 shown in Figures 1 and 2 facilitates detection of a gesture by an object 240 that changes the light intensity 115 (see e.g., Figure 5) in the zone of detection of one or more of the ALSs 110 due to movement of the object 240. Through the inclusion of three or more ALSs 110 with at least three of the three or more ALSs 110 in a triangular pattern (see e.g., Figure 1), movement of an object 240 may be discerned in three dimensions. As is further detailed below, a gesture is detected and identified based on the changes in light intensity 115 measured by each of the ALSs 110 at different time instants or measurement cycles due to the movement of the object 240. That is, each of the ALSs 110 measure light intensity 115 in sequence with the other ALSs 110 for a measurement cycle or may measure light intensity 115 simultaneously with the other ALSs 110 at a given time instant, and the comparison of light intensity 115 measurements for different time instants or measurement cycles is used to detect a gesture. For example, assuming that the ALSs 110 measure light intensity 115 simultaneously (or near-simultaneously), at the time instant illustrated by Figure 2, the object 240 is positioned such that the light intensity 115 detected by ALS 110z is affected but the light intensity 115 detected by ALSs 110x and 110y is unaffected by the object 240. Based on a direction of movement of the object 240, the light intensity 115 detected by different ones of the ALSs 110x, 110y, 110z may be affected at different times instants by the position of the object 240. The object 240 may be a hand, one or more fingers, a wand or another non-transparent item that partially or completely blocks the passage of ambient light so that its position may be detected based on the effect on measured light intensity 115.

A touch-free gesture may mimic a swipe, also known as a flick, which can be a particular type of touch on a touch-sensitive display. The swipe or flick may begin at an origin point and continue to an end point, for example, a concluding end of the gesture. A gesture may be identified by attributes or characteristics of the gesture as discussed further below. These attributes may include the origin point (of detection by an ALS 110), the end point, the distance travelled by the object 240, the duration, the velocity, and the direction, for example. A gesture may be long or short in distance and/or duration. Two points of the gesture may be utilized to determine a direction of the gesture. A gesture may also include a hover. A hover may be non-movement of the object 240 at a location that is generally unchanged over a period of time.

In the arrangement of ALSs 110 shown in Figures 1 and 2, a minimum distance may be required among the ALSs 110x, 110y, and 110z (e.g., distance 220 between ALSs 110y and 110z) in order to distinguish the movement of the object 240. This minimum distance may generally be on the order of 2 centimeters (cm). More specifically, the minimum distance between ALSs 110 is based on an expected size of the object 240 as one factor. For example, when an open hand is used as the object 240, a greater minimum distance may be required to distinguish a gesture than when one finger is used as the object 240. This is because the open hand would cover all three ALSs 110x, 110y, 110z at more time instants such that a movement of the open hand could only be distinguished when the object 240 is at an edge of the set of ALSs 110x, 110y, 110z. According to one or more embodiments, the ALSs 110 may be positioned at the corners or along the edges of the screen 120 and, thus, the screen 120 size may determine the distance between the ALSs 110. When an open hand is anticipated to be the object 240 used to perform a gesture, a minimum distance between ALSs 110 of 3.5 cm may be used. The increased distance between ALSs 110 facilitates distinguishing the gesture (e.g., direction, speed) more clearly, because all ALSs 110 will not be covered by the open hand object 240 for the majority of the gesture movement.

Another distance that must be considered is the distance between the object 240 and the ALS 110 (e.g., distance 250 between the object 240 and ALS 110z). First, as Figure 2 makes clear, the object 240 must be between the light source 210 and the ALSs 110 in order to be detected by one or more of the ALSs 110 based on the effect of the object 240 on light intensity 115 detected by one or more of the ALSs 110. While a minimum distance is generally not required between the object 240 and an ALS 110 (i.e. the object 240 may almost touch the screen 120 surface), the object 240 may generally be 2 - 3 cm away from the screen 120 while performing the gesture. When the object 240 is too close to the ALSs 110 (screen 120 surface), then some portion of the beginning or end of a gesture may not be detected. This is due to the fact that the width of the zone of reception of the ALSs 110 (as shown in the cross-sectional depiction of Figure 2 by 230y and 230y' and by 230z and 230z', for example) is narrowest at the surface of the ALSs 110 and increases with increased distance from the ALSs. Thus, as is clear from Figure 2, an object 240 that is closer in distance to an ALS 110 (screen 120 surface) must also be closer to a center of the ALS 110 (in the perpendicular dimension, along the screen 120) in order to enter the zone of reception of the ALS 110. By hovering the object 240 above a given ALS 110 and moving it farther away (reducing the object 240 effect and increasing light intensity 115 measurement) or closer together (increasing the object 240 effect and decreasing light intensity 115 measurement), a gesture analogous to a mouse click may be made. Thus, double-click and triple-click gestures may be added to available distinguishable gestures.

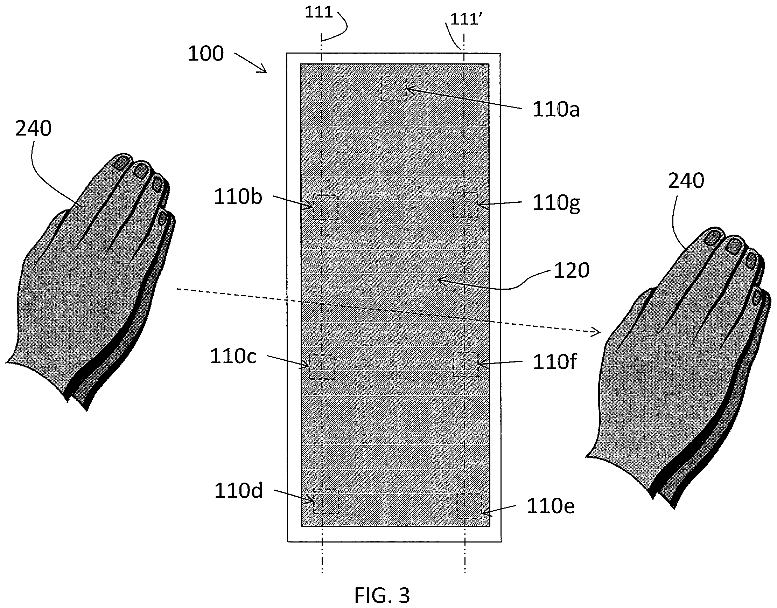

Figure 3 shows a device 100 including an exemplary arrangement of ambient light sensors 110 according to another embodiment. The exemplary device 100 shown in Figure 3 is similar to the device 100 shown in Figures 1 and 2 in that the screen 120 occupies most of one surface of the device 100. The device 100 shown in Figure 3 includes seven ALSs 110a, 110b, 110c, 110d, 110e, 110f, 110g arranged around the perimeter of the screen 120. As shown in Figure 3, ALS 110a is offset from a common axial line 111 of ALSs 110b, 110c, and 110d and also a common axial line 111' of ALSs 110e, 110f, and 110g. In alternate embodiments, one or more of the ALSs 110b, 110c, and 110d or the ALSs 110e, 110f, and 110g may be disposed such that they are not linearly aligned with other ALSs 110 along 111 or 111', respectively. For example, both ALS 110c and ALS 110f may be disposed closer to the center of the screen 120 and, thus, offset from the axial line 111 common to ALSs 110b and 110d and the axial line 111' common to ALSs 110e and 110g, respectively. Increasing the number of ALSs 110 increases the number of gestures that may be detected by the device 100. For example, one waving gesture (movement of the object 240 from one side of the device 100 to the other) is illustrated by Figure 3. Because of the number of ALSs 110 around the perimeter of the screen 120, other waving gestures, distinguishable from the waving gesture shown in Figure 3, are also possible. The object 240 may move from ALSs 110d and 110e to ALS 110a, for example, or from ALS 110d to ALS 110g. It bears noting that, if the ALSs 110 were clustered closer together and the object 240 is a hand, as shown in Figure 3, fewer distinguishable gestures are possible than when the ALSs 110 are disposed, as shown.

Figure 4 shows a device 100 including an exemplary arrangement of ambient light sensors 110 according to yet another embodiment. Unlike the exemplary devices 100 shown in Figures 1-3, the device 100 shown in Figure 4 includes a keyboard or other component in the space 410 such that the screen 120 occupies less of one surface of the device 100 relative to the screen 120 shown in Figures 1-3. Three ALSs 110m, 110n, 110o are shown near the perimeter of the screen 120. As noted above and shown in Figure 1, the ALSs 110m, 110n, 110o may be disposed closer together so that the gestures made by the object 240 are more analogous to gestures a user of a touchpad may make with a finger.

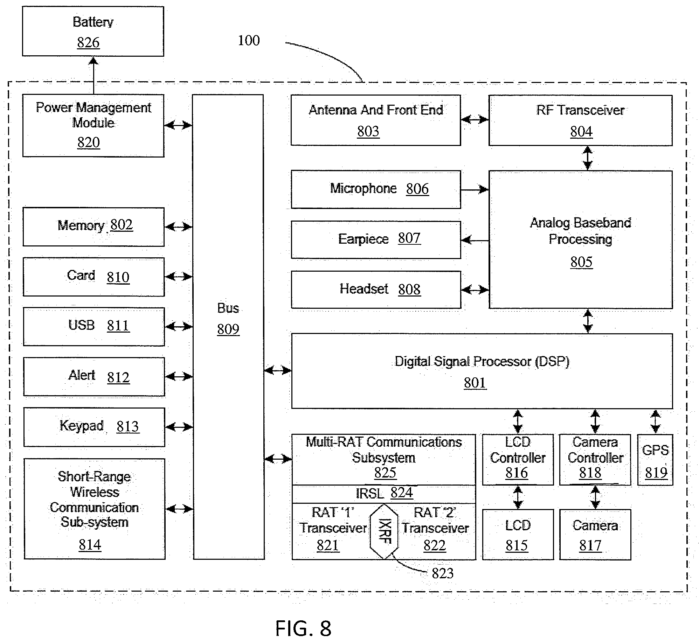

Figure 5 is a block diagram of a system 500 to process gestures. Functions performed by the system 500 are discussed below with reference to specific components. However, in alternate embodiments, the system 500 may process gestures using one or more processors and one or more memory devices that serve more than one of the functions discussed herein. In addition, the same processors and memory devices that process gestures as discussed below may perform other functions within the device 100. For example, the processor to identify gestures may be one of several digital signal processors (DSPs 801, Figure 8) generally available in a smart phone or tablet.

An input to the system 500 is the light intensity 115 measured from each of the ALSs 110. The measurements are received by a data collection engine 510, which includes both memory and processor functionalities. As the light intensity 115 measurement data is received from each of the ALSs 110, the data collection engine 510 outputs a frame of data 520 for each time instant. That is, each frame of data 520 includes the light intensity 115 measurement for every ALS 110 at a given time instant. While each frame of data 520 may generally be discussed as including the light intensity 115 measurement for each ALS 110 at an instant of time, the ALSs 110 sample light intensity 115 in turn (rather than simultaneously) such that a frame of data 520 includes light intensity 115 measurements for a period of time for one cycle of the ALSs 110. A processor functioning as a gesture identifier 530 receives each frame of data 520. The gesture identifier 530 may operate according to one of several embodiments as discussed below.

In order to identify a movement of the object 240 as a particular (known) gesture, the gesture identifier 530 uses a comparison of light intensity 115 measurements of the ALSs 110, as discussed below, along with a comparison with a gesture template 537 stored in a template memory device 535. A dynamically adjusted minimum change in light intensity 115 may be set based on expected noise and errors. That is, a threshold percentage of change in detected light intensity 115 may be required before it is interpreted as a true variation in ambient light. Based on the light intensity 115 measurements among the ALSs 110 within a frame of data 520 (for a single time instant or measurement cycle), the gesture identifier 530 may ascertain a position of the object 240. For example, for a given frame of data 520, if the light intensity 115 measurements of ALSs 110d and 110f are higher (by a defined threshold) than the light intensity 115 measurement output by ALS 110e, then the object 240 may be determined to be over the ALS 110e and, thereby, blocking some of the light from the light source 210. Based on the light intensity 115 measurements among two or more frames of data 520 (two or more time instants or measurement cycles), the gesture identifier 530 may ascertain characteristics of the (movement) gesture such as a direction of the movement, speed of the movement, and whether the movement is accelerating or decelerating. For example, if the light intensity 115 measurements of ALSs 110d and 110f are higher (by a defined threshold) than the light intensity 115 measurement output by ALS 110e in one frame of data 520 and the light intensity 115 measurement of ALS 110e is higher (by a defined threshold) than the light intensity 115 measurements output by ALSs 110d and 110f in the next frame of data 520, the gesture identifier 530 may ascertain that the object 240 moved from a direction of the ALS 110e toward a direction of the ALSs 110d and 110f. If the change in light intensity 115 measurements occurred over several frames of data 520, then the movement of the object 240 may be ascertained as being relatively slower than if the change occurred over the course of one frame of data 240. Based on the ascertained characteristics of the gesture, the gesture identifier 530 may identify the gesture among a set of known gestures based on the gesture template 537.

The gesture template 537 facilitates the association of a movement of the object 240 discerned by the gesture identifier 530 with a particular known gesture. The gesture template 537 may be regarded as a sample of ideal light intensity 115 measurement data corresponding with each known gesture. More specifically, the gesture template 537 may be regarded as providing the ideal relative light intensity 115 among the ALSs 110 or frames of data 520 or both for a given known gesture. Thus, by comparing the input light intensity 115 measurements (in the frames of data 520) or comparisons of light intensity measurements 115 with the ideal measurements in the gesture template 537, the gesture identifier 530 identifies the object 240 movement as a known gesture. This identification of the gesture may be done by a process of elimination of the known gestures in the gesture template 537. Thus, the gesture identifier 530 may identify the gesture using the gesture template 537, through a process of elimination of available known gestures, before the object 240 movement is complete. In this case, the gesture identifier 530 may continue to process frames of data 520 to verify the detected gesture or, in alternate embodiments, the gesture identifier 530 may stop processing additional frames of data 520 after identifying the gesture and wait for a trigger signal 540 discussed below. Each of the ALSs 110 may be programmable to provide 10, 20, 50, 10, 125, 15, 200 and 250 samples of light intensity 115 (frames of data 520) a second. The ALS 110 scanning rate is a factor in determining the speed at which a gesture may be made in order to be recognized. That is, when the ALSs 110 are sampling at a rate of 10 light intensity 115 samples per second, the fastest identifiable gesture is much slower than the fastest identifiable gesture that may be made when the ALSs 110 are sampling at a rate of 250 light intensity 115 samples per second. The ALSs 115 sampling at a rate of 10 frames of data 520 per second (10 light intensity 115 samples per second each) may translate to an object 240 travelling 10 cm in 1.5 seconds in order to be recognized and processed properly. The system 610 (Figure 6) may dynamically calculate and adjust the scanning rate of the ALSs 110.

Another input to the gesture identifier 530 is one of the gesture libraries 555 stored in a gesture library storage 550. Each gesture library 555 is associated with an application, and the gesture identifier 530 selects the gesture library 555 associated with the application currently being executed by the device 100. A given gesture library 555 associated with a given application may not include every known gesture in the gesture template 537. Thus, based on the application currently being executed by the device 100, the gesture identifier 530 may narrow down the set of known gestures within the gesture template 537 to compare against the frames of data 520 output by the data collection engine 510 in order to identify the gesture. A gesture library 555 indicates an action output 560 corresponding with a set of gestures. Thus, when the gesture identifier 530 identifies a known gesture based on the movement of the object 240 and the gesture template 537, and the gesture identifier 530 finds that known gesture among the set of gestures in a gesture library 555 associated with the application currently being run by the device 100, then the gesture identifier 530 outputs the corresponding action output 560 stemming from the object 240 movement. The action output 560 of the gesture identifier 530 acts as a command to the application being executed. For example, when the application being executed is a document editing session, the gestures identified by the gesture identifier 530 may correspond with action outputs 560 such as "next page" (wave down), "previous page" (wave up), "zoom in" (bringing fingers together), and "zoom out" (spreading fingers apart). If the device 100 is currently not executing any application or if the application currently being executed by the device 100 does not have a gesture library 555 associated with it, then, even if the gesture identifier 530 uses the gesture template 537 to identify a known gesture based on the movement of the object 240, no action is taken by the gesture identifier 530 based on identifying the gesture. That is, there is no action output 560 corresponding with the identified gesture, because there is no gesture library 555 to look up.

According to one embodiment, the gesture identifier 530 may not use the gesture template 537 to identify a gesture when no application is being executed by the device 100 or when an application without an associated gesture library 555 is being executed by the device 100. According to another embodiment, the gesture identifier 530 may not begin to process any frames of data 520 before receiving a trigger signal 540. The trigger signal 540 is detailed below with reference to Figure 6. According to another embodiment, the gesture identifier 530 may process an initial set of frames of data 520 and then not process another set of frames of data 520 needed to identify the gesture until the trigger signal 540 is received. For example, the gesture identifier 530 may process a particular number of frames of data 520 or a number of frames of data 520 representing a particular length of time (number of time instants) and then stop processing further frames of data 520 until the trigger signal 540 is received. According to yet another embodiment, the gesture identifier 530 may continually process frames of data 520 as they are output from the data collection engine 510.

Regardless of the behavior of the gesture identifier 530 based on the trigger signal 540, the lack of an associated gesture library 555, or the lack of an application being executed at all, the data collection engine 510 still outputs the frames of data 520. This is because the light intensity 115 measurements may be used for background functions such as adjustment of the screen 120 backlighting, for example, based on the detected ambient light, even if gesture detection is not to be performed. Some of these background functions are detailed below with reference to Figure 6.

Figure 6 is a block diagram of a system 610 to control the two or more ambient light sensors 110. As noted with reference to Figure 5, the functions described for the system 610 may be performed by one or more processors and one or more memory devices, which may also perform other functions within the device 100. The system 610 may be regarded as a background processing system, because it may operate continuously to dynamically control the ALSs 110. The system 610 receives the light intensity 115 measurements output by the ALSs 110 to the data collection engine 510 as frames of data 520. In alternate embodiments, the ALSs 110 may directly output light intensity 115 measurements to the system 610 as well as to the data collection engine 510. The system 610 may also receive additional information 620. This additional information 620 may indicate, for example, whether the device 100 is currently executing an application and, if so, which application the device 100 is currently executing.

Based on the light intensity 115 measurements (directly or in the form of frames of data 520) and the additional information 620, the system 610 adjusts the sensitivity or wavelength band, or optionally the sensitivity or optionally both for each ALS 110. For example, based on the available light (measured ambient light intensity 115), the system 610 changes the wavelength range for the ALSs 110 via a control signal 630 from the system 610 to one or more of the ALSs 110. The change (adjustment of wavelength range) may ensure that the ALSs 110 are focused in the correct wavelength (frequency) band for the current conditions. As another example, based on a change in available light (e.g., based on switching a light on or off), the system 610 may change the sensitivity of the ALSs 110. Any order of switching lights produces a new range of change in light intensity 115 to which the ALSs 110 must adapt. For example, the range of change of light intensity 115 to which the ALSs 110 are sensitive may be 50 - 250 lux. In a darker environment (e.g., a conference room during a presentation) the range of change of light intensity 115 to which the ALSs 110 are sensitive may be 2 - 15 lux. The adjustment of the ALSs 110 through the control signal 630 may be done continuously, periodically, or based on a trigger event such as, for example, a change in the application being executed by the device 100. For example, sensitivity adjustment may be done automatically once for every 5 frames of data 520. The system 610 may also adjust the order and frequency of light intensity 115 measurements by the ALSs 110. For example, based on additional information 620 indicating that a particular application is being executed by the device 100, the system 610 may send control signals 630 to have the ALSs 110 collect light intensity 115 samples for each cycle (frame of data 520) in a particular order and with a particular frequency.

In addition to controlling the ALSs 110, the system 610 may provide the trigger signal 540 to the gesture identifier 530 (see Figure 5). Because the system 610 monitors the light intensity 115 measurements in the frames of data 520 to fulfill the background functions described above, the system 610 may additionally identify trigger events that signal when gesture processing should be initiated by the gesture identifier 530 and output the trigger signal 540 accordingly. For example, the system 610 may output a trigger signal 540 to the gesture identifier 530 when it receives a frame of data 520 that indicates a change in light intensity 115 measured by one or more ALSs 110. The change in light intensity 115 measurement may indicate a start of a movement of an object 240 and, thus, the start of a gesture. In various embodiments, the change in measured light intensity 115 may be 10% +/- 3% or higher before the system 610 outputs a trigger signal 540. In an embodiment, the change in measured light intensity 115 may be 20% +/- 5% or higher before the system 610 outputs a trigger signal 540. In an embodiment, the change in measured light intensity may be 25% +/- 5% or higher before the system 610 outputs a trigger signal 540.

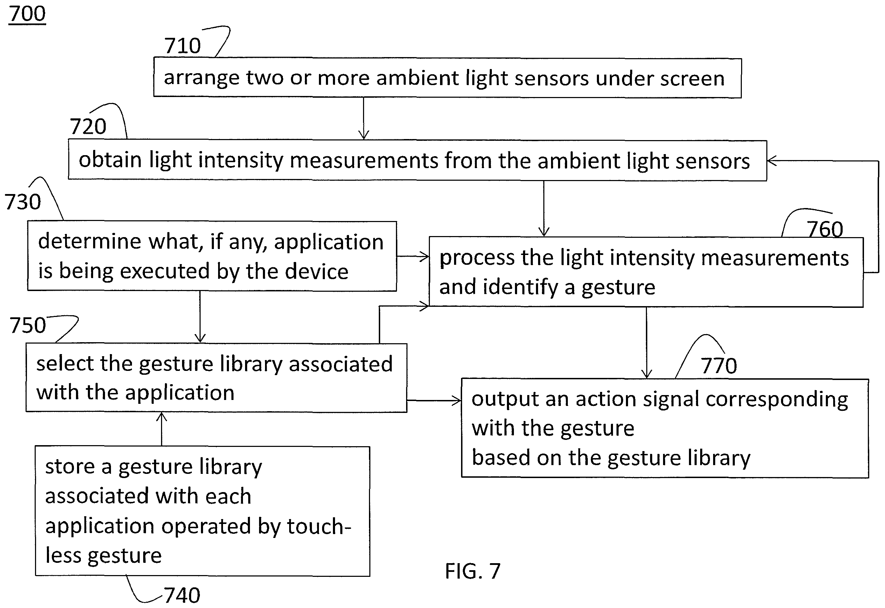

Figure 7 shows the process flow of a method 700 of detecting a gesture according to embodiments discussed above. At block 710, arranging two or more ALSs 110 under the screen 120 of a device 100 may be according to the embodiments shown in Figure 1, 3, and 4 or in alternate arrangements according to the guidelines discussed above. Obtaining light intensity 115 measurements from the ALSs 110 (block 720) may be in photometric or radiometric units as discussed above. Obtaining (receiving) the light intensity 115 measurements also include dynamically controlling the ALSs 110 with the system 610 to modify the wavelength range or optionally spectral sensitivity of each ALS 110, for example. As discussed with reference to Figure 6, the control by the system 610 may be based on light intensity 115 measurements by the ALSs 110, for example. Determining what, if any, application is being executed by the device 100, at block 730, may be done by the gesture identifier 530 and may be part of the additional information 620 provided to the system 610. At block 740, the process includes storing a gesture library 555 associated with each application that may be operated using touch-less gestures in the gesture library storage 550. Selecting the gesture library 555 associated with the application being executed by the device 100 may be done by the gesture identifier 530 at block 750. Block 750 may also include the gesture identifier 530 determining that no gesture library 555 is applicable because the device 100 is not executing any application or is executing an application without an associated gesture library 555. At block 760, processing the light intensity 115 measurements and identifying a gesture involves the data collection engine 510 outputting the frames of data 520 and the gesture identifier 530 using a comparison of light intensity 115 measurements in addition to the gesture template 537. Block 760 may also include the system 610 sending a trigger signal 540 to the gesture identifier 530 to begin or continue the gesture processing. Block 760 may further include the gesture identifier 530 not identifying the gesture at all based on not having a gesture library 555 available. At block 770, outputting an action signal 560 corresponding with the gesture based on the gesture library 555 is done by the gesture identifier 530 as detailed above.

Figure 8 is a block diagram of an exemplary device 100 that facilitates touch-less gesture detection as described in embodiments above. While various components of the device 100 are depicted, alternate embodiments of the device 100 may include a subset of the components shown or include additional components not shown in Figure 8. The device 100 includes a DSP 801 and a memory 802. The DSP 801 and memory 802 may provide, in part or in whole, the functionality of the system 500 (Figure 5). As shown, the device 100 may further include an antenna and front-end unit 803, a radio frequency (RF) transceiver 804, an analog baseband processing unit 805, a microphone 806, an earpiece speaker 807, a headset port 808, a bus 809, such as a system bus or an input/output (I/O) interface bus, a removable memory card 810, a universal serial bus (USB) port 811, an alert 812, a keypad 813, a short range wireless communication sub-system 814, a liquid crystal display (LCD) 815, which may include a touch sensitive surface, an LCD controller 816, a charge-coupled device (CCD) camera 817, a camera controller 818, and a global positioning system (GPS) sensor 819, and a power management module 820 operably coupled to a power storage unit, such as a battery 826. In various embodiments, the device 100 may include another kind of display that does not provide a touch sensitive screen. In one embodiment, the DSP 801 communicates directly with the memory 802 without passing through the input/output interface ("Bus") 809.

In various embodiments, the DSP 801 or some other form of controller or central processing unit (CPU) operates to control the various components of the device 100 in accordance with embedded software or firmware stored in memory 802 or stored in memory contained within the DSP 801 itself. In addition to the embedded software or firmware, the DSP 801 may execute other applications stored in the memory 802 or made available via information media such as portable data storage media like the removable memory card 810 or via wired or wireless network communications. The application software may comprise a compiled set of machine-readable instructions that configure the DSP 801 to provide the desired functionality, or the application software may be high-level software instructions to be processed by an interpreter or compiler to indirectly configure the DSP 801.

The antenna and front-end unit 803 may be provided to convert between wireless signals and electrical signals, enabling the device 100 to send and receive information from a cellular network or some other available wireless communications network or from a peer device 100. In an embodiment, the antenna and front-end unit 803 may include multiple antennas to support beam forming and/or multiple input multiple output (MIMO) operations. As is known to those skilled in the art, MIMO operations may provide spatial diversity, which can be used to overcome difficult channel conditions or to increase channel throughput. Likewise, the antenna and front-end unit 803 may include antenna tuning or impedance matching components, RF power amplifiers, or low noise amplifiers.

In various embodiments, the RF transceiver 804 facilitates frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 805 or the DSP 801 or other central processing unit. In some embodiments, the RF Transceiver 804, portions of the antenna and front-end unit 803, and the analog base band processing unit 805 may be combined in one or more processing units and/or application specific integrated circuits (ASICs).

Note that, in this diagram, the radio access technology (RAT) RAT1 and RAT2 transceivers 821, 822, the IXRF 823, the IRSL 824 and Multi-RAT subsystem 825 are operably coupled to the RF transceiver 804 and analog baseband processing unit 805 and then also coupled to the antenna and front-end unit 803 via the RF transceiver 804. As there may be multiple RAT transceivers, there will typically be multiple antennas or front ends 803 or RF transceivers 804, one for each RAT or band of operation.

The analog baseband processing unit 805 may provide various analog processing of inputs and outputs for the RF transceivers 804 and the speech interfaces (806, 807, 808). For example, the analog baseband processing unit 805 receives inputs from the microphone 806 and the headset 808 and provides outputs to the earpiece 807 and the headset 808. To that end, the analog baseband processing unit 805 may have ports for connecting to the built-in microphone 806 and the earpiece speaker 807 that enable the device 100 to be used as a cell phone. The analog baseband processing unit 805 may further include a port for connecting to a headset or other hands-free microphone and speaker configuration. The analog baseband processing unit 805 may provide digital-to-analog conversion in one signal direction and analog-to-digital conversion in the opposing signal direction. In various embodiments, at least some of the functionality of the analog baseband processing unit 805 may be provided by digital processing components, for example by the DSP 801 or by other central processing units.

The DSP 801 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 801 may perform modulation, coding, interleaving, and spreading, and for a receiver function the DSP 801 may perform despreading, deinterleaving, decoding, and demodulation. In another embodiment, for example in an orthogonal frequency division multiplex access (OFDMA) technology application, for the transmitter function the DSP 801 may perform modulation, coding, interleaving, inverse fast Fourier transforming, and cyclic prefix appending, and for a receiver function the DSP 801 may perform cyclic prefix removal, fast Fourier transforming, deinterleaving, decoding, and demodulation. In other wireless technology applications, yet other signal processing functions and combinations of signal processing functions may be performed by the DSP 801.

The DSP 801 may communicate with a wireless network via the analog baseband processing unit 805. In some embodiments, the communication may provide Internet connectivity, enabling a user to gain access to content on the Internet and to send and receive e-mail or text messages. The input/output interface ("Bus") 809 interconnects the DSP 801 and various memories and interfaces. The memory 802 and the removable memory card 810 may provide software and data to configure the operation of the DSP 801. Among the interfaces may be the USB interface 811 and the short range wireless communication sub-system 814. The USB interface 811 may be used to charge the device 100 and may also enable the device 100 to function as a peripheral device to exchange information with a personal computer or other computer system. The short range wireless communication sub-system 814 may include an infrared port, a Bluetooth interface, an IEEE 802.11 compliant wireless interface, or any other short range wireless communication sub-system, which may enable the device to communicate wirelessly with other nearby client nodes and access nodes. The short-range wireless communication sub-system 814 may also include suitable RF Transceiver, Antenna and Front End subsystems.

The input/output interface ("Bus") 809 may further connect the DSP 801 to the alert 812 that, when triggered, causes the device 100 to provide a notice to the user, for example, by ringing, playing a melody, or vibrating. The alert 812 may serve as a mechanism for alerting the user to any of various events such as an incoming call, a new text message, and an appointment reminder by silently vibrating, or by playing a specific pre-assigned melody for a particular caller.

The keypad 813 couples to the DSP 801 via the I/O interface ("Bus") 809 to provide one mechanism for the user to make selections, enter information, and otherwise provide input to the device 100. The keypad 813 may be a full or reduced alphanumeric keyboard such as QWERTY, DVORAK, AZERTY and sequential types, or a traditional numeric keypad with alphabet letters associated with a telephone keypad. The input keys may likewise include a track wheel, track pad, an exit or escape key, a trackball, and other navigational or functional keys, which may be inwardly depressed to provide further input function. Another input mechanism may be the LCD 815, which may include touch screen capability and also display text and/or graphics to the user. The LCD controller 816 couples the DSP 801 to the LCD 815.

The CCD camera 817, if equipped, enables the device 100 to make digital pictures. The DSP 801 communicates with the CCD camera 817 via the camera controller 818. In another embodiment, a camera operating according to a technology other than Charge Coupled Device cameras may be employed. The GPS sensor 819 is coupled to the DSP 801 to decode global positioning system signals or other navigational signals, thereby enabling the device 100 to determine its position. The GPS sensor 819 may be coupled to an antenna and front end (not shown) suitable for its band of operation. Various other peripherals may also be included to provide additional functions, such as radio and television reception.

In various embodiments, device 100 comprises a first Radio Access Technology (RAT) transceiver 821 and a second RAT transceiver 822. As shown in Figure 16, and described in greater detail herein, the RAT transceivers '1' 821 and '2' 822 are in turn coupled to a multi-RAT communications subsystem 825 by an Inter-RAT Supervisory Layer Module 824. In turn, the multi- RAT communications subsystem 825 is operably coupled to the Bus 809. Optionally, the respective radio protocol layers of the first Radio Access Technology (RAT) transceiver 821 and the second RAT transceiver 822 are operably coupled to one another through an Inter-RAT eXchange Function (IRXF) Module 823.

While several embodiments have been provided in the present disclosure, it should be understood that the disclosed systems and methods may be embodied in many other specific forms without departing from the scope of the present invention as defined by the appended claims. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present invention as defined by the appended claims. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope of the present invention as defined by the appended claims.

## Claims

1. A device (100) to detect a touch-less gesture made by an object (240), the device (100) comprising:
two or more ambient light sensors (110) arranged at respective surface locations of the device (100), each of the two or more ambient light sensors (110) configured to measure light intensity (115) at the respective surface location; and
a processor (530) configured to detect the touch-less gesture based on a comparison of two or more frames of data (520), each frame of data (520) comprising light intensity (115) measurements for a respective measurement cycle of each of the two or more ambient light sensors (110), where the two or more ambient light sensors (110) sample light intensity (115) in turn during the respective measurement cycle;
**characterised in that**:
each of the two or more ambient light sensors (110) has a range of operation that is selectable among two or more wavelength bands; and
the device (100) further comprises
a second processor (610) configured to dynamically control the two or more ambient light sensors (110) by changing, based on the light intensity (115) measured by one or more of the two or more ambient light sensors (110), the range of operation for each of the two or more ambient light sensors (110) to another wavelength band among the selectable two or more wavelength bands.

2. The device (100) according to claim 1, wherein two of the two or more ambient light sensors (110) are aligned on a linear axis (111, 111').

3. The device according to claim 1, wherein the two or more ambient light sensors (110) comprise three or more ambient light sensors (110), and wherein at least one of the three or more ambient light sensors (110) is offset from a linear axis (111, 111') common to two of the three or more ambient light sensors (110).

4. The device according to claim 1, wherein the two or more ambient light sensors (110) are passive devices located under a glass surface (120) of the device (100).

5. The device (100) according to claim 1, wherein the processor (530) detects the touch-less gesture based additionally on a template (537) including a set of known gestures.

6. The device (100) according to claim 1, wherein the processor (530) outputs a signal (560) based on the touch-less gesture.

7. The device (100) according to claim 6, wherein the processor (530) associates the touch-less gesture with the signal (560) based on an application being executed by the device (100), and the signal (560) controls an aspect of the application.

8. The device (100) according to claim 1, wherein the second processor (610) dynamically controls the two or more ambient light sensors (110) based on an application being executed by the device (100).

9. A method (700) of detecting a touch-less gesture made by an object (240), the method comprising:
measuring (720), using two or more ambient light sensors (110) arranged at respective surface locations of a device (100), light intensity (115) at the respective surface locations;
comparing (760), using a processor (530) of the device (100), two or more frames of data (520) to identify one or more characteristics of the touch-less gesture, wherein each frame of data (520) comprises light intensity (115) measurements for a respective measurement cycle of each of the two or more ambient light sensors (110), and wherein the two or more ambient light sensors (110) sample light intensity (115) in turn during the respective measurement cycle;
detecting (760), using the processor (530), the touch-less gesture based on the one or more characteristics;
**characterised in that**:
each of the two or more ambient light sensors (110) has a range of operation that is selectable among two or more wavelength bands; and
the method (700) further comprises dynamically controlling, using a second processor (610) of the device (100), the two or more ambient light sensors (110) by changing, based on the light intensity (115) measured by one or more of the two or more ambient light sensors (110), the range of operation for each of the two or more ambient light sensors (110) to another wavelength band among the selectable two or more wavelength bands.

10. The method (700) according to claim 9, wherein the detecting (760) the touch-less gesture includes comparing the one or more characteristics to characteristics of a set of known gestures in a template (537).

11. The method (700) according to claim 9, further comprising the processor (530) associating (770) the touch-less gesture with a signal (560) based on an application being executed by the device (100) and outputting (770) the signal (560) to the application, the signal (560) controlling an aspect of the application.

## Patentansprüche

1. Vorrichtung (100) zum Erkennen einer berührungslosen Geste, die von einem Objekt (240) ausgeführt wird, wobei die Vorrichtung (100) folgendes umfasst:
zwei oder mehrere Umgebungslichtsensoren (110), die an jeweiligen Oberflächenpositionen der Vorrichtung (100) angeordnet sind, wobei jeder der zwei oder mehreren Umgebungslichtsensoren (110) dazu konfiguriert ist, die Lichtintensität (115) an der jeweiligen Oberflächenposition zu messen; und
einen Prozessor (530), der dazu konfiguriert ist, berührungslose Gesten basierend auf einem Vergleich von zwei oder mehr Datenrahmen (520) zu erkennen, wobei jeder Datenrahmen (520) Messungen der Lichtintensität (115) für einen jeweiligen Messzyklus von jedem der zwei oder mehreren Umgebungslichtsensoren (110) umfasst, wobei die zwei oder mehreren Umgebungslichtsensoren (110) die Lichtintensität (115) während des jeweiligen Messzyklus der Reihe nach erfassen;
**dadurch gekennzeichnet, dass**:
jeder der zwei oder mehreren Umgebungslichtsensoren (110) einen Betriebsbereich aufweist, der zwischen zwei oder mehreren Wellenlängenbändern wählbar ist; und
die Vorrichtung (100) ferner einen zweiten Prozessor (610) umfasst, der dazu konfiguriert ist, die zwei oder mehreren Umgebungslichtsensoren (110) dynamisch zu steuern, indem er basierend auf der von einem oder mehreren der zwei oder mehreren Umgebungslichtsensoren (110) gemessenen Lichtintensität (115) den Betriebsbereich für jeden der zwei oder mehreren Umgebungslichtsensoren (110) in ein anderes Wellenlängenband zwischen den wählbaren zwei oder mehreren Wellenlängenbändern ändert.

2. Die Vorrichtung (100) gemäß Anspruch 1, wobei zwei der zwei oder mehreren Umgebungslichtsensoren (1110) auf einer Linearachse (111, 111') ausgerichtet sind.

3. Die Vorrichtung gemäß Anspruch 1, wobei die zwei oder mehreren Umgebungslichtsensoren (110) drei oder mehrere Umgebungslichtsensoren (110) umfassen, und wobei mindestens einer der drei oder mehreren Umgebungslichtsensoren (110) von einer Linearachse (111, 111') versetzt ist, die die zwei der drei oder die mehreren Umgebungslichtsensoren (110) gemein haben.

4. Die Vorrichtung gemäß Anspruch 1, wobei die zwei oder mehreren Umgebungslichtsensoren (110) (110) (110) passive Vorrichtungen sind, die unter einer Glasoberfläche (120) der Vorrichtung (100) angeordnet sind.

5. Die Vorrichtung gemäß Anspruch 1, wobei der Prozessor (530) die berührungslose Geste basierend auf einer Vorlage (537) mit einem Satz bekannter Gesten erkennt.

6. Die Vorrichtung gemäß Anspruch 1, wobei der Prozessor (530) ein Signal (560) basierend auf der berührungslosen Geste ausgibt.

7. Die Vorrichtung (100) gemäß Anspruch 6, wobei der Prozessor (530) die berührungslose Geste dem Signal (560) basierend auf einer von der Vorrichtung (100) ausgeführten Anwendung zuordnet, und das Signal (560) einen Aspekt der Anwendung steuert.

8. Die Vorrichtung (100) gemäß Anspruch 1, wobei der zweite Prozessor (610) die zwei oder mehreren Umgebungslichtsensoren (110) basierend auf einer Anwendung, die von der Vorrichtung (100) ausgeführt wird, dynamisch steuert.

9. Verfahren (700) zum Erfassen einer berührungslosen Geste, die von einem Objekt (240) ausgeführt wird, wobei das Verfahren die folgenden Schritte umfasst:
Verfahren (700) zum Erkennen einer berührungslosen Geste, die von einem Objekt (240) ausgeführt wird, wobei das Verfahren die folgenden Schritte umfasst:
Messen (720) mittels zwei oder mehreren Umgebungslichtsensoren (110), die an entsprechenden Oberflächenpositionen einer Vorrichtung (100) angeordnet sind, der Lichtintensität (115) an den jeweiligen Oberflächenpositionen;
Vergleichen (760) unter Verwendung eines Prozessors (530) der Vorrichtung (100) von zwei oder mehreren Datenrahmen (520), um eine oder mehrere Eigenschaften der berührungslosen Geste zu identifizieren, wobei jeder Datenrahmen (520) Lichtintensitätsmessungen (115) für einen jeweiligen Messzyklus jedes der zwei oder mehreren Umgebungslichtsensoren (110) umfasst, und wobei die zwei oder mehreren Umgebungslichtsensoren (110) die Lichtintensität (115) während des jeweiligen Messzyklus der Reihe nach erfassen;
Erkennen (760) der berührungslosen Geste unter Verwendung des Prozessors (530) basierend auf dem einen oder mehreren Merkmalen;
**dadurch gekennzeichnet, dass**:
jeder der zwei oder mehreren Umgebungslichtsensoren (110) einen Betriebsbereich aufweist, der zwischen zwei oder mehreren Wellenlängenbändern wählbar ist; und
das Verfahren (700) ferner das dynamische Steuern, mittels eines zweiten Prozessors (610) der Vorrichtung (100), der zwei oder mehreren Umgebungslichtsensoren (110) durch Ändern des Betriebsbereichs für jeden der zwei oder mehreren Umgebungslichtsensoren (110) auf ein anderes Wellenlängenband unter den wählbaren zwei oder mehreren Wellenlängenbändern basierend auf der von einem oder mehreren der zwei oder mehreren Umgebungslichtsensoren (110) gemessenen Lichtintensität (115) umfasst.

10. Das Verfahren (700) gemäß Anspruch 9, wobei das Erkennen (760) der berührungslosen Geste das Vergleichen des einen oder der mehreren Merkmale mit Merkmalen eines Satzes bekannter Gesten in einer Vorlage (537) beinhaltet.

11. Das Verfahren (700) gemäß Anspruch 9, ferner umfassend den Prozessor (530), der die berührungslose Geste einem Signal (560) basierend auf einer von der Vorrichtung (100) ausgeführten Anwendung zuordnet (770) und das Signal (560) an die Anwendung ausgibt (770), wobei das Signal (560) einen Aspekt der Anwendung steuert.

## Revendications

1. Dispositif (100) pour détecter un geste sans contact effectué par un objet (240), le dispositif (100) comprenant :
deux de deux capteurs de lumière ambiante (110) agencés à des emplacements de surface respectifs du dispositif (100), chacun des deux de deux capteurs de lumière ambiante (110) étant configuré pour mesurer une intensité de lumière (115) à l'emplacement de surface respectif ; et
un processeur (530) configuré pour détecter le geste sans contact sur la base d'une comparaison de deux de deux trames de données (520), chaque trame de données (520) comprenant des mesures de l'intensité de lumière (115) pour un cycle de mesure respectif de chacun des deux de deux capteurs de lumière ambiante (110), où les deux de deux capteurs de lumière ambiante (110) échantillonnent l'intensité de lumière (115) tour à tour pendant le cycle de mesure respectif ;
**caractérisé en ce que** :
chacun des de deux deux capteurs de lumière ambiante (110) a une plage de fonctionnement qui peut être sélectionnée parmi deux de deux bandes de longueur d'onde ; et
le dispositif (100) comprenant en outre
un deuxième processeur (610) configuré pour commander de manière dynamique les deux ou plus de deux capteurs de lumière ambiante (110) en faisant passer, sur la base de l'intensité de lumière (115) mesurée par un ou plusieurs des deux ou plus de deux capteurs de lumière ambiante (110), la plage de fonctionnement pour chacun des deux ou plus de deux capteurs de lumière ambiante (110) à une autre bande de longueur d'onde parmi les deux ou plus de deux bandes de longueur d'onde sélectionnables.

2. Dispositif (100) selon la revendication 1, dans lequel deux des deux ou plus de deux capteurs de lumière ambiante (110) sont alignés sur un axe linéaire (111, 111').

3. Dispositif selon la revendication 1, dans lequel les deux ou plus de deux capteurs de lumière ambiante (110) comprennent trois ou plus de trois capteurs de lumière ambiante (110), et dans lequel au moins l'un des trois ou plus de trois capteurs de lumière ambiante (110) est décalé par rapport à un axe linéaire (111, 111') commun à deux des trois ou plus de trois capteurs de lumière ambiante (110).

4. Dispositif selon la revendication 1, dans lequel les deux ou plus de deux capteurs de lumière ambiante (110) sont des dispositifs passifs situés sous une surface de verre (120) du dispositif (100).

5. Dispositif (100) selon la revendication 1, dans lequel le processeur (530) détecte le geste sans contact sur la base, en plus, d'un modèle (537) comportant un ensemble de gestes connus.

6. Dispositif (100) selon la revendication 1, dans lequel le processeur (530) délivre en sortie un signal (560) sur la base du geste sans contact.

7. Dispositif (100) selon la revendication 6, dans lequel le processeur (530) associe le geste sans contact au signal (560) sur la base d'une application exécutée par le dispositif (100), et le signal (560) commande un aspect de l'application.

8. Dispositif (100) selon la revendication 1, dans lequel le deuxième processeur (610) commande de manière dynamique les deux ou plus de deux capteurs de lumière ambiante (110) sur la base d'une application exécutée par le dispositif (100).

9. Procédé (700) de détection d'un geste sans contact effectué par un objet (240), le procédé comprenant les étapes consistant à :
mesurer (720), en utilisant deux ou plus de deux capteurs de lumière ambiante (110) agencés à des emplacements de surface respectifs d'un dispositif (100), une intensité de lumière (115) aux emplacements de surface respectifs ;
comparer (760), en utilisant un processeur (530) du dispositif (100), deux ou plus de deux trames de données (520) pour identifier une ou plusieurs caractéristiques du geste sans contact, où chaque trame de données (520) comprend des mesures de l'intensité de lumière (115) pour un cycle de mesure respectif de chacun des deux ou plus de deux capteurs de lumière ambiante (110), et où les deux ou plus de deux capteurs de lumière ambiante (110) échantillonnent l'intensité de lumière (115) tour à tour pendant le cycle de mesure respectif ;
détecter (760), en utilisant le processeur (530), le geste sans contact sur la base des une ou plusieurs caractéristiques ;
**caractérisé en ce que** :
chacun des deux ou plus de deux capteurs de lumière ambiante (110) a une plage de fonctionnement qui peut être sélectionnée parmi deux ou plus de deux bandes de longueur d'onde ; et
le procédé (700) comprenant en outre la commande dynamique, en utilisant un deuxième processeur (610) du dispositif (100), des deux ou plus de deux capteurs de lumière ambiante (110) en faisant passer, sur la base de l'intensité de lumière (115) mesurée par un ou plusieurs des deux ou plus de deux capteurs de lumière ambiante (110), la plage de fonctionnement pour chacun des deux ou plus de deux capteurs de lumière ambiante (110) à une autre bande de longueur d'onde parmi les deux ou plus de deux bandes de longueur d'onde sélectionnables.

10. Procédé (700) selon la revendication 9, dans lequel la détection (760) du geste sans contact comporte la comparaison des une ou plusieurs caractéristiques à des caractéristiques d'un ensemble de gestes connus dans un modèle (537).

11. Procédé (700) selon la revendication 9, comprenant en outre, par le biais du processeur (530), l'étape consistant à associer (770) le geste sans contact à un signal (560) sur la base d'une application exécutée par le dispositif (100) et à délivrer en sortie (770) le signal (560) à l'application, le signal (560) commandant un aspect de l'application.
